# EUROPÄISCHE PATENTSCHRIFT

(11) **EP 2 641 462 B1**
(45) Veröffentlichungstag und Bekanntmachung des Hinweises auf die Patenterteilung: **13.04.2016**
(21) Anmeldenummer: 13159165.3
(22) Anmeldetag: 14.03.2013
(51) Int. Cl.: A01F 15/14

(54) **Bindevorrichtung**
Binding device
Dispositif de liaison

(30) Priorität: 23.03.2012 DE 102012005764
(43) Veröffentlichungstag der Anmeldung: 25.09.2013
(73) Patentinhaber: Deere & Company, Moline, IL 61265 (US)
(72) Erfinder: Pailett, Frederic, 70100 Gray (FR)
(74) Vertreter: Reichert, Christian

(56) Entgegenhaltungen:
- EP-A1- 0 819 376
- EP-A2- 0 680 689
- WO-A1-97/18700
- US-A- 5 855 167

## Beschreibung

Die Erfindung betrifft eine Bindevorrichtung für eine Rundballenpresse zum Binden eines gepressten Ballens mit einem Bindegarn, mit wenigstens einer Bindegarnführung, wenigstens einem von der Bindegarnführung geführten Bindegarn und wenigstens einer Schneideinrichtung zum Durchtrennen des Bindegarns nach einem Bindevorgang, wobei die Schneideinrichtung eine Schneidelementführung und eine an der Schneidelementführung ausgebildete Schneidelementaufnahme umfasst, an der ein eine Schneidkante aufweisendes Schneidelement befestigt ist, welches zum Durchtrennen des Bindegarns von der Schneidelementführung an das Bindegarn geführt und mit dem Bindegarn in Eingriff bringbar ist, wobei an der Schneidelementführung zwischen Schneidelement und Bindegarn eine Auslenkkante ausgebildet ist, welche das Bindegarn unter Aufbau einer Bindegarnspannung in eine Auslenkbewegung versetzt, bevor das Bindegarn mit der Schneidkante in Eingriff bringbar ist.

Es sind Ballenpressen bekannt, die mit einer Bindevorrichtung ausgestattet sind, um das zu einem Ballen gepresste Erntegut durch Umwickeln mit einem Garn zusammenzuhalten. Derartige Bindevorrichtungen umfassen in der Regel eine mechanisch gesteuerte Bindegarnführung in Form eines oder mehrerer Führungsarme, welche das Bindegarn entlang der Ballenwickelfläche führen, während der Rundballen sich dreht. Nach Beendigung des Bindevorgangs muss das Bindegarn durchtrennt werden, damit der Ballen die Presskammer verlassen kann. Zum Durchtrennen des Bindegarn werden Schneideinrichtungen verwendet, die mit den Führungsarmen gekoppelt sind und nach oder während des Bindevorgangs in Richtung des Bindegarns geführt werden. Die Schneideinrichtung umfasst in der Regel eine Schneidmesserführung, beispielsweise in Form eines weiteren Führungsarms, mit einer Schneidmesseraufnahme in der ein Schneidmesser aufgenommen ist. Die Führungsarme sind so gesteuert, dass nach Beendigung des Bindevorgangs die Schneidkante des Schneidmessers mit dem Bindegarn in Eingriff tritt. In der Regel trifft das Bindegarn Stoß auf Stoß und unter einer geringen Bindegarnspannung auf die Schneidklinge, was zum einen zu einer mangelhaften Schnittfläche des Bindegarns und zum anderen zum Verschleiß des Schneidmessers und damit zu einer geringen Lebensdauer führt. Ferner kann eine schlechte Schnittfläche am Bindegarn zum Ausfransen des Bindegarns führen. Damit kann der darauffolgende Einfädelungsprozess für den neuen Ballen behindert werden, dies führt zu Unterbrechungen des Ballenwickelprozesses und damit zu einem erhöhten Zeitaufwand.

Die EP 0 819 376 A1 offenbart eine Rundballenpresse mit einem Garnführer und einer Garnbindevorrichtung zum Aufbringen eines Garns auf einen in einer Presskammer einer Rundballenpresse gepressten Rundballen. Ferner ist eine Schneidklinge vorgesehen, die durch die Bewegung des Garnführers am Garn zum Angriff gebracht wird. Die Schneidklinge ist am Garnführer in einer festen Position angeordnet, wobei das Garn zum Durchtrennen durch Umlenken beim Austritt aus dem Garnführer relativ zu einem Auslas des Garnführers gegen die Schneidklinge geführt wird.

Ferner offenbart die EP 0 680689 A2 eine Rundballenpresse mit einer Garnbindeeinrichtung zum Binden eines gepressten Rundballens. Die Garnbindeeinrichtung umfasst eine Garnführungseinrichtung mit einem Garnführungsarm und einer Schneideinrichtung zum Durchtrennen eines Garns, wobei die Garnführungseinrichtung mit der Schneideinrichtung zusammenwirkt, so dass das Garn zu einem von einer Außerbetriebsstellung in eine Betriebsstellung gebrachten Schneidmechanismus geführt wird, nachdem eine vordefinierte Menge an Garn abgespult wurde.

Die beiden genannten Offenbarungen stellen keine Lösung der oben geschilderten Problematik dar.

Die der Erfindung zugrunde liegende Aufgabe wird darin gesehen, eine Bindevorrichtung der eingangs genannten Art anzugeben, durch welches die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine Bindevorrichtung der eingangs genannten Art derart ausgebildet, dass durch die Auslenkkante das Bindegarn unter zunehmendem Aufbau der Bindegarnspannung entlang der Auslenkkante zur Schneidkante bewegt wird, wobei die Auslenkkante eine Einbuchtung umfasst, durch welche die Bewegung des Bindegarns entlang der Auslenkkante zur Schneidkante unter zunehmendem Aufbau der Bindegarnspannung verzögerbar ist. Durch die Auslenkkante wird das Bindegarn zum einen in eine Art Vorspannung gebracht und zum anderen ausgelenkt, so dass das Durchtrennen des Bindegarns beim Eingreifen der Schneidkante mit einer Relativbewegung des Bindegarns in Längsrichtung der Schneidkante und mit erhöhter Bindegarnspannung vollzogen wird. Dadurch wird der Verschleiß der Schneidkante reduziert und die Schnittfläche am Bindegarn optimiert. Durch die kontinuierliche Bewegung der Schneidmesserführung gleitet das Bindegarn über die Oberfläche der Auslenkkante. Dazu kann die Auslenkkante angeschrägt sein und eine Art schräge Ebene oder Rampe formen, über die das Bindegarn geführt wird. Die Bindegarnspannung erhöht sich während sich das Bindegarn kontinuierlich auf die Schneidkante hinzu bewegt bewegt. Dadurch, dass die Auslenkkante eine Einbuchtung oder Mulde umfasst, durch welche die Bewegung des Bindegarns entlang der Auslenkkante zur Schneidkante unter zunehmendem Aufbau der Bindegarnspannung verzögerbar ist, wird eine Art Spannungsspitze erzeugt, durch die sich das Bindegarn katapultartig von der Ausnehmung löst, nachdem die Bindespannung entsprechend angestiegen ist. Durch das katapultartige Lösen bewegt sich das Bindegarn beschleunigt in Richtung der Schneidkante. Dies erhöht den Schneideffekt zusätzlich.

Die Auslenkkante kann einen Endbereich umfassen, an dem das Bindegarn unter aufgebauter Bindegarnspannung und einer maximalen Auslenkung von der Auslenkkante frei gegeben wird. Das Bindegarn wird dann über eine Art Hochpunkt im Laufe seines Weges entlang der Auslenkkante zur Schneidfläche geführt, so dass es über den Endbereich unter höchster Bindegarnspannung rutschen kann und in Folge dessen sich mit hoher Geschwindigkeit in einer Gleitbewegung entlang der Schneidkante bewegt und sauber durchtrennt wird.

An der Schneidelementaufnahme ist ein Steg ausgebildet, der sich über die Schneidkante und über den Endbereich der Auslenkkante erstreckt. Der Steg verhindert einen direkten Zugang zur Schneidkante, welche zum einen durch den Steg und zum anderen durch die Auslenkkante verdeckt wird. zum anderen wird durch den Steg auch die Schneidkante selbst vor Beschädigung geschützt.

Eine erfindungsgemäße Bindevorrichtung findet Verwendung in Ballenpressen, vorzugsweise Rundballenpressen.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
Fig. 1 eine schematische Ansicht einer erfindungsgemäßen Bindevorrichtung mit Schneideinrichtung während des Bindevorgangs,
Fig. 1a eine vergrößerte Ansicht der Schneideinrichtung der Bindevorrichtung aus Figur 1,
Fig. 2 eine schematische Ansicht der erfindungsgemäßen Bindevorrichtung mit Schneideinrichtung zu Beginn eines ersten Schneidvorgangs (nach dem Bindevorgang)
Fig. 2a eine vergrößerte Ansicht der Schneideinrichtung der Bindevorrichtung aus Figur 2,
Fig. 3 eine schematische Ansicht der erfindungsgemäßen Bindevorrichtung mit Schneideinrichtung zu Beginn eines zweiten Schneidvorgangs (nach dem Bindevorgang),
Fig. 3a eine vergrößerte Ansicht der Schneideinrichtung der Bindevorrichtung aus Figur 3,
Fig. 4 eine schematische Ansicht einer erfindungsgemäßen Bindevorrichtung mit Schneideinrichtung nach den Schneidvorgängen und
Fig. 4a eine vergrößerte Ansicht der Schneideinrichtung der Bindevorrichtung aus Figur 1.

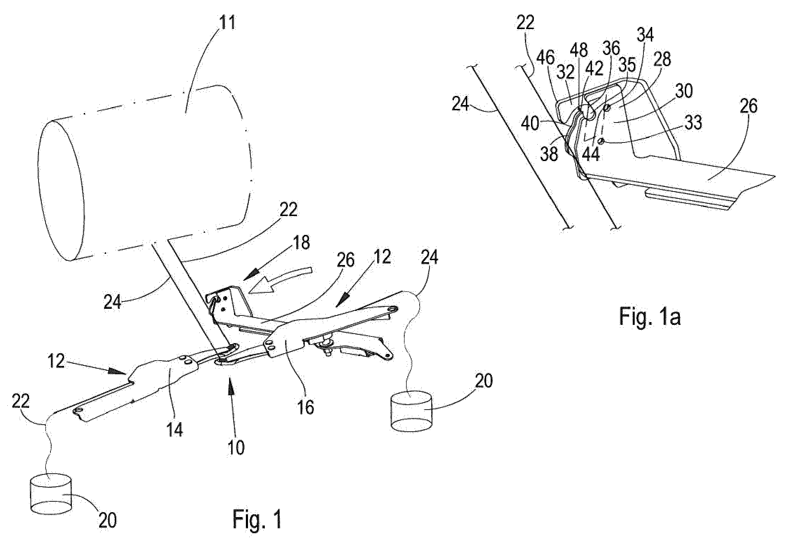

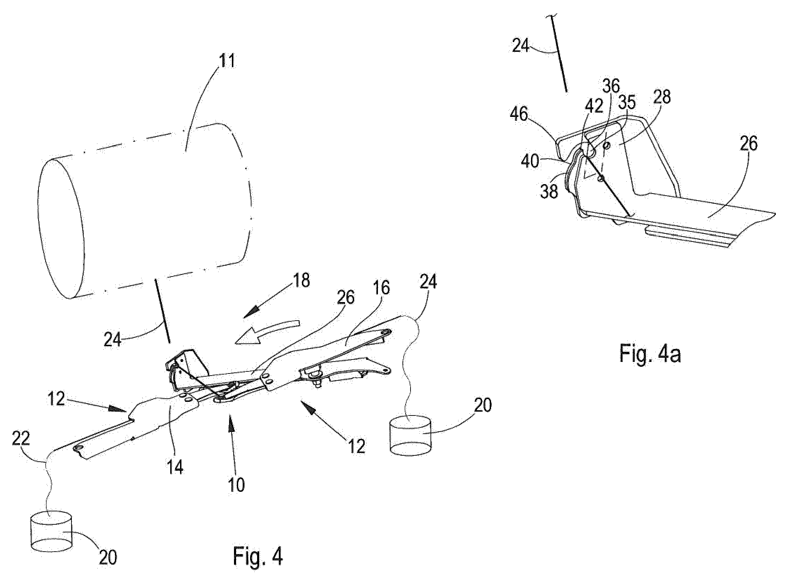

In den Figuren 1, 1a bis 4, 4a ist der Bindevorgang und der Schneidvorgang für eine erfindungsgemäße Bindevorrichtung 10 dargestellt. Die Bindevorrichtung 10 kann in herkömmlichen Rundballenpressen (nicht gezeigt), wie sie insbesondere in der Landwirtschaft zum Pressen von Erntegut zu einem Rundballen 11 bekannt sind, zum Einsatz kommen. Die Bindevorrichtung 10 umfasst eine Bindegarnführung 12, umfassend einen ersten und einen zweiten Bindegarnführungsarm 14, 16, eine Schneideinrichtung 18 sowie Vorratsspulen 20 für Bindegarn 22, 24, wobei ein erstes Bindegarn 22 durch den ersten Bindegarnführungsarm 14 und ein zweites Bindegarn 24 durch den zweiten Bindegarnführungsarm 16 geführt wird. Die Schneideinrichtung 18 umfasst eine Schneidelementführung 26 und eine an der Schneidelementführung 26 ausgebildete Schneidelementaufnahme 28 (siehe insbesondere Figuren 1a, 2a, 3a und 4a). Die Schneidelementführung 26 ist in Form eines weiteren Führungsarms ausgebildet, wobei die Bindegarnführungsarme 14, 16 mit der Schneidelementführung 26 mechanisch gekoppelt sind und in bekannter Weise synchron zueinander abgestimmte Bewegungen ausführen, die im Folgenden anhand der Figuren 1a, 2a, 3a und 4a genauer beschrieben sind. Die mechanische Kopplung ist als solche nur exemplarisch gewählt, so dass synchron aufeinander abgestimmte Bewegungen der Führungsarme 14, 16, 26 auch durch elektronische oder hydraulische sowie pneumatische Stellmotoren realisiert werden können. Die Schneidelementaufnahme 28 an der Schneidelementführung 26 umfasst eine Befestigungsplatte 30 an der eine Einspannplatte 32 durch Befestigungselemente in Form von Verschraubungen 33, 34 befestigt ist. Zwischen der Befestigungsplatte 30 und der Einspannplatte 32 ist ein Schneidelement 35 in Form eines Schneidmessers mit einer scharfen Schneidkante 36 eingespannt. An der Schneidelementaufnahme 28 ist an der Einspannplatte 32 eine Auslenkkante 38 ausgebildet. An der Auslenkkante 38 ist eine Einbuchtung 40 oder Mulde ausgebildet, die in einen Endbereich 42 der Auslenkkante 38 mündet, wobei die Auslenkkante in Richtung des Schneidelements 35 schräg zuläuft, so dass sich ein entlang der Auslenkkante 38 gleitendes bzw. geführtes Bindegarn 22, 24 in Richtung der Schneidkante 36 bewegt. An dem Schneidelement 35 ist zur Positionssicherung des Schneidelements 35 eine Aussparung 44 vorgesehen, die mit der Verschraubung 34 in Eingriff steht, so dass ein voreingestellter Sitz des Schneidelements 34 und damit eine voreingestellte Ausrichtung der Schneidkante 36 gegeben ist. Ferner ist an der Schneidelementaufnahme 28 an der Einspannplatte 32 ein Steg 46 in Form eines Fingers ausgebildet, der sich über die Schneidkante 36, über die Auslenkkante 38 und über den Endbereich 42 erstreckt und mit der Auslenkkante 38 einen Bindegarnführungskanal 48 bildet, durch den das Bindegarn 22, 24 während eines Schneidvorgangs geführt wird. Zudem wird die Schneidkante 36 durch den Steg 46 abgedeckt und somit gegen Beschädigung oder Zugang durch eine Bedienperson, beispielsweise bei Wartungsarbeiten, geschützt.

Der Bindevorgang zum Umwickeln des Rundballens 11 erfolgt dadurch, dass das Bindegarn 22, 24 durch die entsprechenden Bindegarnführungsarme 14, 16 von den Stirnseiten des Rundballens 11 aus entlang der Umfangsfläche des Rundballens zur Mitte geführt wird (siehe Figur 1), während sich dieser in einer durch die Rundballenpresse hervorgerufenen Drehbewegung befindet. Der Rundballen 11 wird dadurch mit mehreren Wicklungen von Bindegarn 22, 24 umwickelt, so dass die Pressform des Rundballens 11 vom Bindegarn 22, 24 gehalten wird. Gleichzeitig wird die Schneidelementführung 26 von außen zur Mitte des Rundballens 11 geführt und sodann ein Schneidvorgang zum Durchtrennen des Bindegarns 22, 24 eingeleitet (siehe insbesondere Figuren 1a bis 4a).

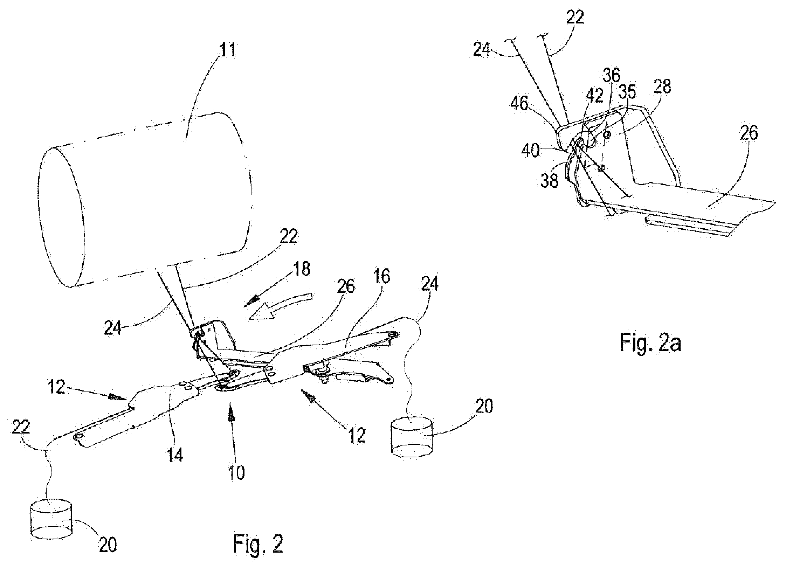

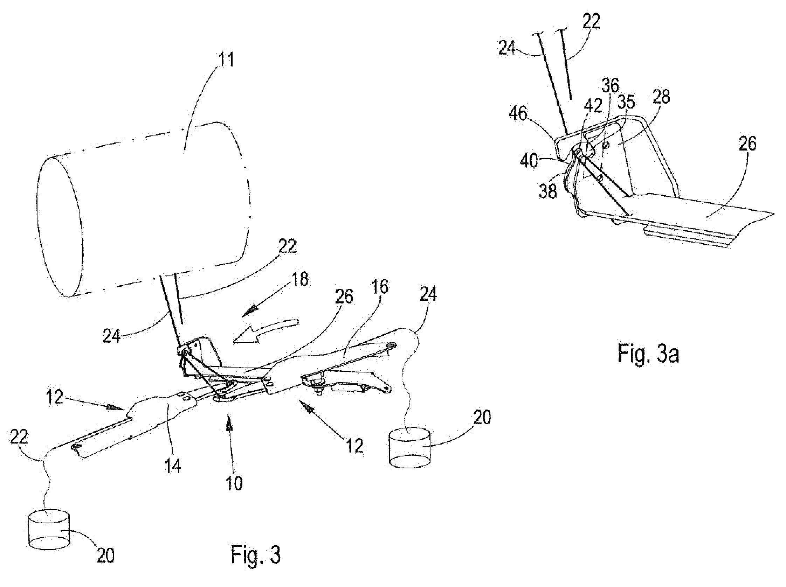

Figur 1 a zeigt den Zustand, in dem die Schneidelementaufnahme 28 mit der Auslenkkante 38 mit dem ersten Bindegarn 22 in Eingriff tritt. Das Bindegarn 22 gleitet entlang der schräg ausgebildeten Oberfläche der Auslenkkante 38 in Richtung des Schneidelements 35 und vollzieht durch die fortlaufende Bewegung (siehe Pfeile in den Figuren 1, 2, 3, und 4) der Schneidelementführung 26 sowie durch die damit verbundene Reibungskraft eine Auslenkbewegung nach oben (entlang der Auslenkkante 38) und zur Seite, durch welche eine Bindegarnspannung aufgebaut wird und sich das Bindegarn 22 gegen die Auslenkkante 38 spannt (siehe Figur 2a). Das Bindegarn 22 gleitet entlang der Auslenkkante 38 in die Einbuchtung 40 oder Mulde, wodurch die Gleitbewegung des Bindegarns 22 bei fortlaufender Bewegung der Schneidelementführung 26 verzögert bzw. unterbrochen wird und sich dadurch die Bindegarnspannung weiter erhöht. Gleichzeitig tritt die Auslenkkante 38 mit dem zweiten Bindegarn 24 in Eingriff, welches beginnt entlang der Auslenkkante 38 ebenfalls die beschriebene Gleitbewegung auszuführen (siehe Figur 2a). Das erste Bindegarn 22 erreicht sodann eine maximale Bindegarnspannung und gleitet über den Endbereich 42 der Auslenkkante 38 hinweg und wird unter Vorspannung durch die aufgebaute Bindegarnspannung zum einen gegen die Schneidkante 36 und zum anderen aber auch in Längsrichtung entlang der Schneidkante 36 geführt, sodass eine gleitende Schnittbewegung entlang der Schneidkante 36 und keine reine Stoßbewegung gegen die Schneidkante 36 ausgeführt wird (sieh Figur 3a). Das Bindegarn 22 wird dadurch mit einer sauberen Schnittfläche durchtrennt. Bei fortlaufender Bewegung der Schneidelementführung 26 (siehe Pfeil in Figur 2) erfährt das zweite Bindegarn 24 den gleichen Bewegungsablauf, wie zum ersten Bindegarn 22 bereits beschrieben wurde, bis auch dieses in einer gleitenden Schnittbewegung entlang der Schneidkante 36 sauber durchtrennt wird (siehe Figur 4a). Durch die gleitenden Schnittbewegungen an den Bindegarnen 22, 24 wird die Schneidkante 36 des Schneidelements 35 geschont und ein Verschleiß gemindert. Gleichzeitig wird die Schnittqualität an den Schnittflächen des Bindegarns 22, 24 verbessert und ein Ausfransen des Bindegarns 22, 24 vermieden.

## Patentansprüche

1. Bindevorrichtung (10) für eine Rundballenpresse zum Binden eines gepressten Ballens (11) mit einem Bindegarn (22, 24), mit wenigstens einer Bindegarnführung (12) wenigstens einem von der Bindegarnführung (12) geführtem Bindegarn (22, 24) und wenigstens einer Schneideinrichtung (18) zum Durchtrennen des Bindegarns (22, 24) nach einem Bindevorgang, wobei die Schneideinrichtung (18) eine Schneidelementführung (26) und eine an der Schneidelementführung (26) ausgebildete Schneidelementaufnahme (28) umfasst, an der ein eine Schneidkante (36) aufweisendes Schneidelement (35) befestigt ist, welches zum Durchtrennen des Bindegarns (22, 24) von der Schneidelementführung (26) an das Bindegarn (22, 24) geführt und mit dem Bindegarn (22, 24) in Eingriff bringbar ist, wobei an der Schneidelementführung (26) zwischen Schneidelement (35) und Bindegarn (22, 24) eine Auslenkkante (38) ausgebildet ist, welche das Bindegarn (22, 24) unter Aufbau einer Bindegarnspannung in eine Auslenkbewegung versetzt, bevor das Bindegarn (22, 24) mit der Schneidkante (35) in Eingriff bringbar ist, **dadurch gekennzeichnet, dass** die Auslenkkante (38) derart ausgebildet ist, dass das Bindegarn (22, 24) unter zunehmendem Aufbau der Bindegarnspannung entlang der Auslenkkante (38) zur Schneidkante (36) bewegt wird, wobei die Auslenkkante (38) eine Einbuchtung (40) umfasst, durch welche die Bewegung des Bindegarns (22, 24) entlang der Auslenkkante (38) zur Schneidkante (36) unter zunehmendem Aufbau der Bindegarnspannung verzögerbar ist.

2. Bindevorrichtung (10) nach Anspruch 1, **dadurch gekennzeichnet, dass** die Auslenkkante (38) einen Endbereich (42) umfasst, an dem das Bindegarn (22, 24) unter aufgebauter Bindegarnspannung und einer maximalen Auslenkung von der Auslenkkante (38) frei gegeben wird.

3. Bindevorrichtung (10) nach einem der vorhergehenden Ansprüche, **dadurch gekennzeichnet, dass** an der Schneidelementaufnahme (28) ein Steg (46) ausgebildet ist, der sich über die Schneidkante (36) und über den Endbereich der Auslenkkante (42) erstreckt.

4. Ballenpresse, insbesondere Rundballenpresse, mit einer Bindevorrichtung (10) nach einem der Ansprüche 1 bis 3.

## Claims

1. Binding apparatus (10) for a round baler in order to bind a pressed bale (11) with a binding yarn (22, 24), having at least one binding yarn guide (12), at least one binding yarn (22, 24) guided by the binding yarn guide (12) and at least one cutting device (18) for severing the binding yarn (22, 24) after a binding operation, wherein the cutting device (18) comprises a cutting element guide (26) and, formed on the cutting element guide (26), a cutting element holder (28) to which there is fastened a cutting element (35) which has a cutting edge (36) and which, in order to sever the binding yarn (22, 24), is guided to the binding yarn (22, 24) by the cutting element guide (26) and can be brought into contact with the binding yarn (22, 24), wherein a deflecting edge (38) is formed on the cutting element guide (26) between the cutting element (35) and the binding yarn (22, 24), said deflecting edge (38) displacing the binding yarn (22, 24) in a deflecting movement, with binding yarn tension being built up, before the binding yarn (22, 24) can be brought into contact with the cutting edge (35), **characterized in that** the deflecting edge (38) is formed such that the binding yarn (22, 24) is moved along the deflecting edge (38) towards the cutting edge (36), with binding yarn tension being increasingly built up, wherein the deflecting edge (38) comprises an indentation (40), by way of which the movement of the binding yarn (22, 24) along the deflecting edge (38) towards the cutting edge (36) can be slowed down, with the binding yarn tension being increasingly built up.

2. Binding apparatus (10) according to Claim 1, **characterized in that** the deflecting edge (38) comprises an end region (42) at which the binding yarn (22, 24) is released under built-up binding yarn tension and maximum deflection by the deflecting edge (38).

3. Binding apparatus (10) according to either of the preceding claims, **characterized in that** a bar (46) is formed on the cutting element holder (28), said bar (46) extending over the cutting edge (36) and over the end region of the deflecting edge (42).

4. Baler, in particular round baler, having a binding apparatus (10) according to one of Claims 1 to 3.

## Revendications

1. Dispositif de liaison (10) pour une ramasseuse-presse à grosses balles cylindriques pour la liaison d'une balle pressée (11) avec un fil de liaison (22, 24), avec au moins un guide de fil de liaison (12), au moins un fil de liaison (22, 24) guidé par le guide de fil de liaison (12) et au moins un dispositif de coupe (18) pour la coupe du fil de liaison (22, 24) après une opération de liaison, dans lequel le dispositif de coupe (18) comprend un guide d'élément de coupe (26) et un logement d'élément de coupe (28) formé sur le guide d'élément de coupe (26), auquel est fixé un élément de coupe (35) présentant une arête de coupe (36), qui est guidé sur le fil de liaison (22, 24) par le guide d'élément de coupe (26) pour la coupe du fil de liaison (22, 24) et qui peut être mis en prise avec le fil de liaison (22, 24), dans lequel une arête de déviation (38) est formée sur le guide d'élément de coupe (26) entre l'élément de coupe (35) et le fil de liaison (22, 24), qui déplace le fil de liaison (22, 24) dans un mouvement de déviation avec création d'une tension du fil de liaison, avant que le fil de liaison (22, 24) puisse être mis en prise avec l'arête de coupe (35), **caractérisé en ce que** l'arête de déviation (38) est configurée de telle manière que le fil de liaison (22, 24) soit déplacé le long de l'arête de déviation (38) jusqu'à l'arête de coupe (36) avec augmentation de la tension du fil de liaison, dans lequel l'arête de déviation (38) présente un creux (40), par lequel le mouvement du fil de liaison (22,24) le long de l'arête de déviation (38) vers l'arête de coupe (36) peut être ralenti avec augmentation de la tension du fil de liaison.

2. Dispositif de liaison (10) selon la revendication 1, **caractérisé en ce que** l'arête de déviation (38) comprend une région d'extrémité (42), à laquelle le fil de liaison (22, 24) est libéré de l'arête de déviation (38) sous la tension créée dans le fil de liaison et avec une déviation maximale.

3. Dispositif de liaison (10) selon l'une quelconque des revendications précédentes, **caractérisé en ce qu'**une nervure (46) est formée sur le logement d'élément de coupe (28), laquelle s'étend sur l'arête de coupe (36) et sur la région d'extrémité de l'arête de déviation (42).

4. Presse à balles, en particulier ramasseuse-presse à grosses balles cylindriques, avec un dispositif de liaison (10) selon l'une quelconque des revendications 1 à 3.
